(19) Europäisches Patentamt
European Patent Office
Office européen des brevets

(11) **EP 3 808 660 B1**

(12) **EUROPEAN PATENT SPECIFICATION**

(45) Date of publication and mention of the grant of the patent:
**10.04.2024 Bulletin 2024/15**

(21) Application number: **20201867.7**

(22) Date of filing: **14.10.2020**

(51) International Patent Classification (IPC):
**B64D 25/00** $^{(2006.01)}$

(52) Cooperative Patent Classification (CPC):
**B64D 25/00;** B64D 2201/00

(54) **AUTO-ADAPTIVE AIRBAG SYSTEM FOR AIRCRAFT**

AUTOADAPTIVES AIRBAGSYSTEM FÜR FLUGZEUG

SYSTÈME D'AIRBAG AUTO-ADAPTATIF POUR AÉRONEF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.10.2019 IT 201900018731**

(43) Date of publication of application:
**21.04.2021 Bulletin 2021/16**

(73) Proprietor: **LEONARDO S.p.A.**
**00195 Roma (IT)**

(72) Inventors:
• **PICCOLO, Antonio**
**80125 Napoli (IT)**
• **MASTROIANNI, Gaetana**
**81030 Frignano (CE) (IT)**
• **PAPA, Umberto**
**81030 Succivo (CE) (IT)**
• **BOTTONE, Emanuele**
**80018 Mugnano di Napoli (NA) (IT)**

(74) Representative: **Studio Torta S.p.A. et al**
**Via Viotti, 9**
**10121 Torino (IT)**

(56) References cited:
WO-A1-89/12778          WO-A2-2009/001342
US-A1- 2006 186 656     US-A1- 2007 145 193
US-A1- 2011 272 523     US-B1- 9 452 843

EP 3 808 660 B1

## Description

### Cross-reference to related applications

This patent application claims priority from Italian patent application no. 102019000018731 filed on 14/10/2019.

### Technical field

The present invention relates to an aircraft provided with an auto-adaptive airbag system .

### Background of invention

In cases of emergency/failure, aircrafts may be obliged to carry out landings without landing gear (emergency landing) or even water landings (ditching) when it is impossible to reach a suitable runway. These operations are always very risky and are only successful if the pilot and crew are able to fully apply the flight manual procedures in these emergency situations.

In particular, in the event of ditching, flight manuals envisage, amongst other things, that the impact between the water surface and the aircraft's fuselage must be achieved according to a target angle of inclination with respect to the horizontal (pitch angle) in order to achieve the best dynamic impact behaviour, minimize the loads withstood by the structure and avoid the destruction of the aircraft.

Engine power in ditching conditions is usually very low or null and the actuation of the primary (elevators and ailerons) and secondary (flaps and rudder) control surfaces is often accomplished with auxiliary power sources, such as buffer batteries, of limited duration and power. In consequence, the controllability of the aircraft is problematic and it can be quite difficult for the pilot to achieve impact with the water at the pitch angle value envisaged in the manual.

In cases of emergency landing, one or both of the main landing gears (MLG) and/or the secondary landing gear (usually, the Nose Landing Gear, NLG) might not be available due to failure of the mechanical/hydraulic actuation system, i.e., they do not fully extend from the housing in the fuselage, or they remain unlocked in the extended position due to failure of the locking system. To increase the safety of aircraft in the above-described emergency conditions, airbag systems have been proposed in the aeronautical and aerospace fields that are adapted to spring into action before aircraft impact in order to reduce the impact loads.

### Background of the known art

The patent US8418957 describes a crash attenuation system for an aircraft, in which an airbag carried by the aircraft is inflatable on the exterior of the aircraft. The airbag has at least one vent for releasing gas from the interior of the airbag. A gas source is in communication with the interior of the airbag for inflating the airbag with the gas generated by the gas source.

The patent application US20070284863 describes an airbag module with integrated gas generation that does not require a separate inflator or a separate filter.

The patent US100997786 describes an airbag system for unmanned aerial vehicles (UAV) adapted to protect the aircraft from impacts. The airbag can at least partially surround the UAV, enabling at least partial operability of the UAV even after an impact. In some embodiments, the airbag could be inflated just before the unmanned aircraft makes contact with another flying object. US9452843 and WO8912778 disclose other prior art examples of multiple air bags below the fuselage.

The main limitation that known airbag systems have is the lack of an auto-adaptive capability that enables modifying the structure of the airbag based on the operating conditions, in particular, according to the pitch angle.

The object of the present invention is to provide an aircraft provided with an airbag system that overcomes the problems of the known art.

### Summary of invention

The aforesaid object is achieved by the present invention, which relates to an aircraft provided with an auto-adaptive airbag system of the type described in claim 1.

### Brief description of drawings

The invention will be explained with reference to the accompanying drawings, which show a non-limitative embodiment, in which:

- Figure 1 schematically shows an aircraft provided with an auto-adaptive airbag system constructed according to a first embodiment of the present invention;
- Figures 2, 3 and 4 show the operation of the airbag system of Figure 1;
- Figure 5 schematically shows an aircraft provided with an auto-adaptive airbag system constructed according to a second embodiment of the present invention:
- Figures 6, 7 and 8 show the operation of the airbag system of Figure 5;
- Figure 9 shows a detail of the airbag system according to the present invention; and
- Figure 10 shows the activation logic of the airbag system according to the present invention.

### Detailed description of invention

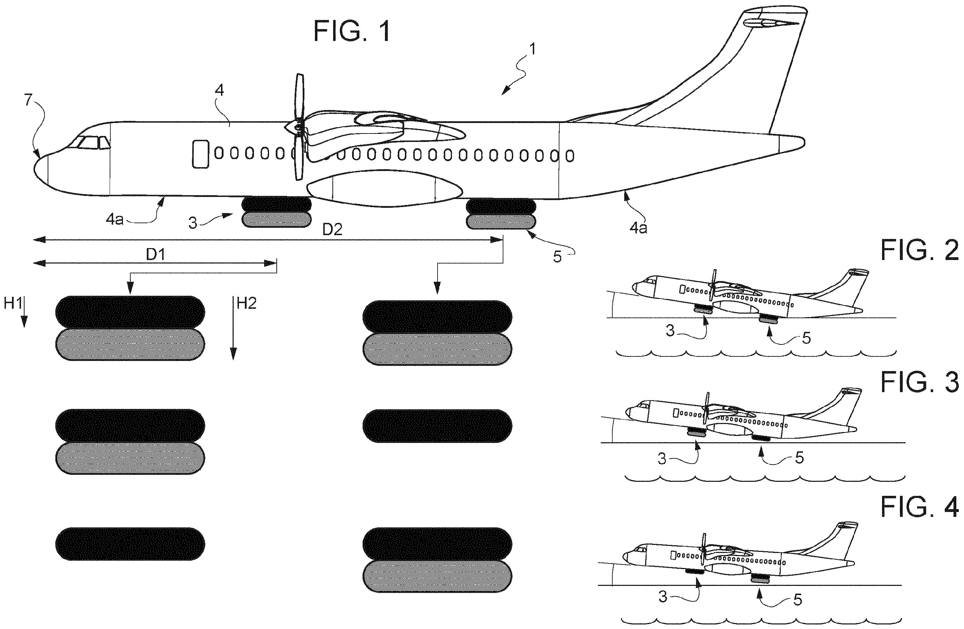

**In Figure 1,** reference numeral 1 indicates an airbag system for aircraft of an auto-adaptive type comprising a first airbag assembly **3** carried by the fuselage **4** of the aircraft and adapted to extend, when inflated following its activation, from a lower side **4a** of the fuselage of the aircraft and at least a second airbag assembly **5** also carried by the fuselage 4 and adapted to extend, when inflated following its activation, also from the lower side 4a of the fuselage 4 of the aircraft.

The first and the second airbag assemblies 3, 5 are spaced from one another along the fuselage 4 of the aircraft.

In greater detail, in the example of Figures 1-5, the first airbag assembly 3 of the front type (FWD) is at a shorter distance D1 from the front end portion 7 of the aircraft compared to the distance D2 at which the second airbag assembly 5 of the rear type (AFT) is from said front end portion 7. In this embodiment, the airbag assemblies 3 and 5 are aligned along a longitudinal direction of the aircraft and are used to reduce the loads applied to the fuselage 4 in the case of the aircraft making an emergency landing on a water surface. These aspects will be explained hereinafter.

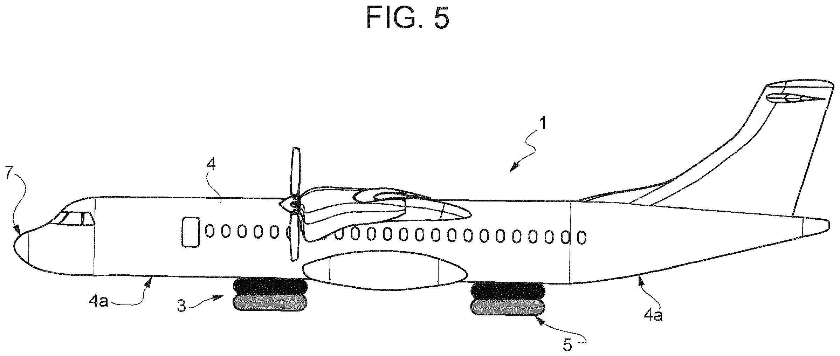

In greater detail, in the example of Figures 5-8, the first airbag assembly 3 and the second airbag assembly 5 are arranged on opposite sides of the fuselage 4 near the housing of the right and left side main landing gears 10a, 10b (schematically shown) and are arranged on opposite sides with respect to the longitudinal axis of the aircraft to reduce the loads resulting from impact of the aircraft's fuselage with the ground in conditions of failure of one or both landing gears 10a, 10b.

According to the present invention, each first and second airbag assembly 3, 5 is configured to be partially or completely activated to alternatively carry out a first arrangement in which the airbag body extends by a first length H1 from the fuselage 4 of the aircraft and a second arrangement in which the airbag body extends by a second length H2 greater than the first length H1 from the fuselage 4 of the aircraft.

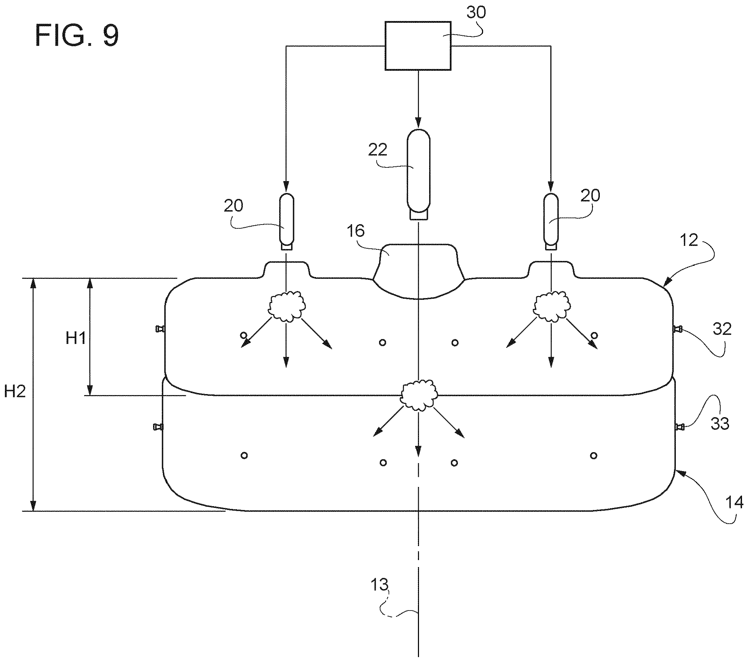

In the example shown (see Figure 9), the first/second airbag assembly 3, 5 comprises a first inflatable casing 12 configured to assume, when inflated in use, a toroidal shape about an axis 13 and a second inflatable casing 14 carried by the first casing 12 and configured to assume, when inflated in use, a cylindrical shape about the axis 13 with an elongated portion 16 extending axially through the central opening of the first toroidal inflatable casing 12.

The first inflatable casing 12 is connected to at least one gas source 20 of the pyrotechnic type or any other type that ensures its equivalent rapid expansion adapted to create the appropriate pressure on the walls of the casing 12, situated in a specially provided, dedicated housing (kit) mounted entirely or partially on the outside of the fuselage 4 and the free end of the elongated portion 16 is connected to a gas source 22 with the same characteristics described above for the source 20. Both gas sources 20,22 are activatable by an electronic control unit 30. When only the first gas source 20 is activated, only the deployment of the first casing 12, which has an axial dimension close to H1, is carried out, when both gas sources 20 and 22 are activated, the deployment of both casings 12 and 14, which together have overall axial dimension H2, is carried out. Both casings 12 and 14 are fitted with respective valves 32, 33 that open when the pressure inside the casing 12, 14 exceeds a threshold value.

The longitudinal distance L between the first airbag assembly 3 and the second airbag assembly 5 is defined according to the maximum correction $\Delta\theta_{MAX}$ of the pitch angle upon impact, based on the relation:

$$\Delta\theta_{MAX} = \texttt{arctang (t2/L)}$$

where L is the longitudinal distance and t2 is the axial dimension of the second inflated casing 14.

As will be explained in detail hereinafter, the electronic control unit 30 is adapted to detect aircraft parameters prior to impact with the water surface or the ground in order to carry out the partial/total activation of each first/second airbag assembly 3, 5 and reduce the impact loads.

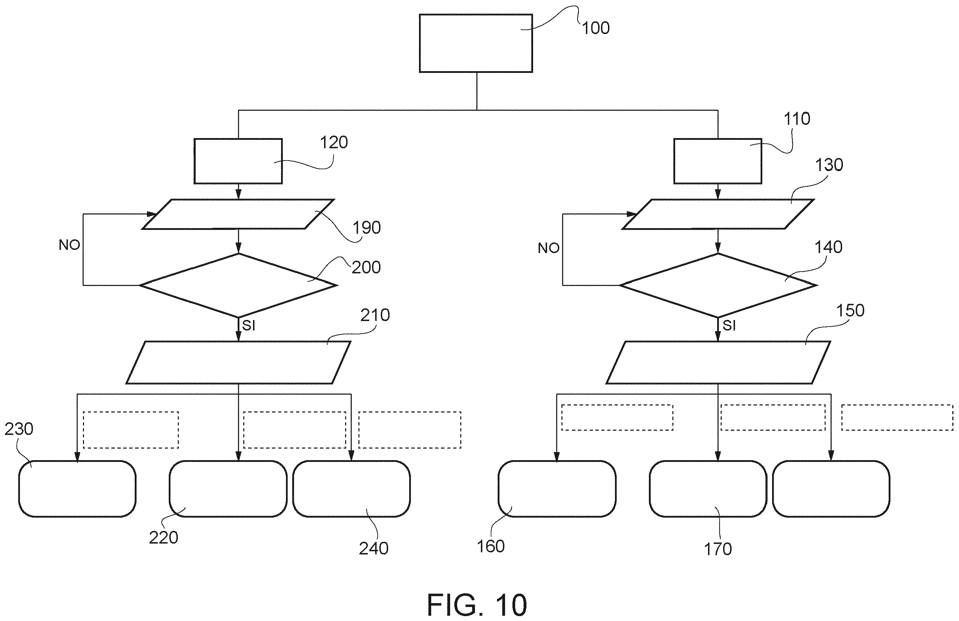

The operation of the electronic control unit 30 is described in the flowchart of Figure 10.

Following activation of the system (block 100), the operator can choose (also through a manual selector) activation of the airbag system 1 in an emergency water landing mode (block 110, Ditching Mode) and a landing mode on the ground with failure of one or both main landing gears (block 120, Crash Mode).

In the first case, block 110 is followed by block 130, which proceeds with reading of the height $H_{oe}$ of the aircraft via the flight instruments (altimeter). When the height $H_{oe}$ is above an activation value $H_{oe-lim}$, the system remains in a loop (block 140 is followed by block 130), otherwise block 140 is followed by block 150, which proceeds with reading of the aircraft's pitch angle. This data is also available from the flight instruments.

Based on the data detected in block 150, the electronic control unit 30 is adapted to control:

o the total activation of the first airbag assembly 3 and the second airbag assembly 5 when the measured pitch angle is equal to or very close to, according to a prescribed tolerance, a target pitch angle envisaged in the flight manuals to reduce impact loads (block 160, Figure 2): for example, the above-described situation occurs when the measured pitch angle (in sexagesimal degrees) is simultaneously greater than or equal to the target pitch angle (in sexagesimal degrees) decreased by 1 sexagesimal degree (prescribed tolerance) and less than or equal to the target pitch angle (in sexagesimal degrees) increased by 1 sexagesimal degree (prescribed tolerance);

o the total activation of the first airbag assembly 3 and the partial activation of the second airbag assembly 5 when the measured pitch angle is greater than the target pitch angle beyond a prescribed tolerance (block 170, Figure 3): for example, the above-described situation occurs when the measured pitch angle (in sexagesimal degrees) is greater than the target pitch angle (in sexagesimal degrees) increased by 1 sexagesimal degree (prescribed tolerance);

o the partial activation of the first airbag assembly 3 and the total activation of the second airbag assembly 5 when the measured pitch angle is less than the target pitch angle beyond a prescribed tolerance (block 180, Figure 4): for example, the above-described situation occurs when the measured pitch angle (in sexagesimal degrees) is less than the target pitch angle (in sexagesimal degrees) decreased by 1 sexagesimal degree (prescribed tolerance).

**The above-described operations** contribute to modifying, upon impact with the water surface, the first point of the aircraft (i.e., the first or second airbag assembly 3, 5) that makes contact with the water by correcting, at least partially, the pitch angle upon impact, to make it as close to the target angle as possible.

Block 120 is followed by block 190, which proceeds with reading the height $H_{oe}$ of the aircraft via the flight instruments (altimeter). When the height $H_{oe}$ is above an activation value $H_{oe\text{-}lim}$, the system remains in a loop (block 200 is followed by block 190), otherwise block 200 is followed by block 210, which proceeds with reading the operational/failure state of the aircraft's main landing gears. This data is also available from the flight instruments.

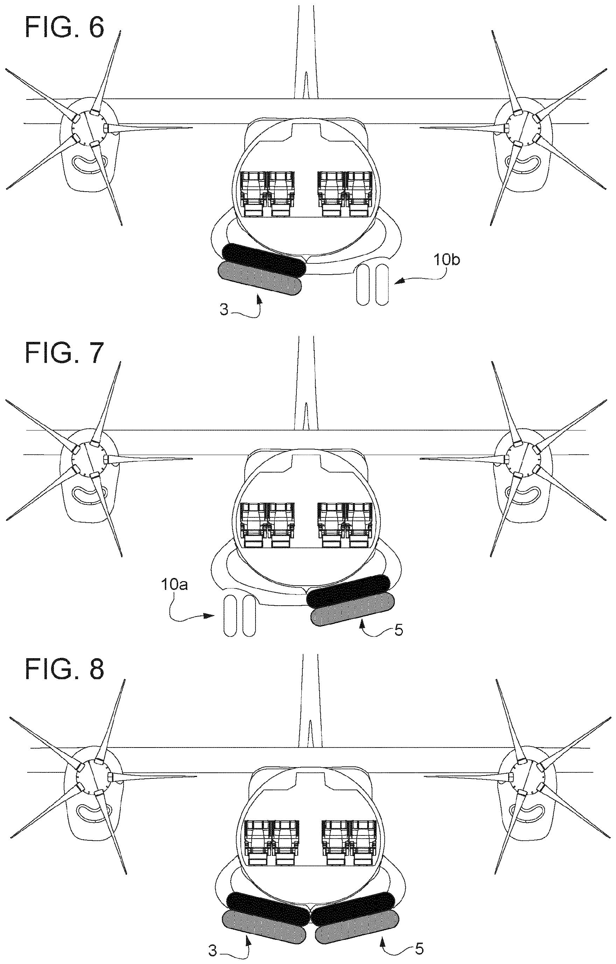

◦ When both main landing gears are in a state of non-extension or unlocked extension, full activation of the first and second airbag assemblies 3, 5 is triggered (block 220, Figure 7);
◦ when the right main landing gear 10a is in a state of non-extension or unlocked extension, activation of the airbag assembly 3 arranged near the housing of that landing gear is triggered (block 230, Figure 6); and
◦ when the left main landing gear 10b is in a state of non-extension or unlocked extension, activation of the airbag assembly 5 arranged near the housing of that landing gear is triggered (block 240, Figure 8).

In this way, the electronic control unit 30 controls the activation of the first and/or second airbag assembly 3, 5 next to the landing gear(s) in the failure state.
**The above-described operations** contribute to mitigating the effects of the crash due to the partial or total lack of landing gear with the activation of the airbag assemblies 3, 5 on one or both sides of the fuselage.
In an example not being covered by the appended claims, the described system can be easily installed on an existing aircraft without substantial changes to the design of the fuselage. The system can thus be configured as a specific aircraft improvement kit, permitting the system to be offered as a retrofit for aircrafts already in service.

**Claims**

1. Aircraft having a fuselage (4) and provided with an airbag system for the aircraft of an auto-adaptive type comprising a first airbag assembly (3) carried by the fuselage (4) and adapted to extend, when inflated following its activation, from a lower side (4a) of the fuselage (4) of the aircraft and at least a second airbag assembly (5) carried by the fuselage (4) and adapted to extend, when inflated following its activation, from the lower side (4a) of the fuselage (4) of the aircraft, the first and the second airbag assemblies (3, 5) being spaced from one another along the fuselage (4) of the aircraft,

wherein each first and second airbag assembly (3, 5) is configured to be partially or completely activated to alternatively carry out a first arrangement in which the airbag body extends by a first length (H1) from the fuselage of the aircraft and a second arrangement in which the airbag body extends by a second length (H2) greater than the first length (H1) from the fuselage of the aircraft; the airbag system is provided with an electronic control unit (30) adapted to detect flight parameters of said aircraft prior to the impact so as to carry out the partial/total activation of each first/second airbag assembly (3, 5) and reduce the impact loads, wherein the first airbag assembly (3) and the second airbag assembly (5) are arranged spaced from each other along the fuselage (4) and are adapted to reduce the loads, resulting from an impact in water of the fuselage of the aircraft; said electronic control unit (30) being adapted to detect the predicted pitch angle upon impact on the water surface and being configured to compare the detected pitch angle with a target pitch angle predicted by the flight manuals to reduce impact loads: said electronic control unit (30) being adapted to control, based on the results of the comparison, the partial or total activation of said first and said second airbag assemblies (3, 5);
**characterised in that** each first and second airbag assembly (3, 5) comprises a first inflatable casing (12) configured to assume, in use, a toroidal shape around an axis (13) and a second inflatable casing (14) carried by the first casing (12) and configured to assume, in use, a cylindrical shape around the axis (13) with an elongated portion (16) extending axially through the central opening of the first toroidal inflatable casing (12);

further **characterised in that** the first inflatable casing (12) is connected to at least one first gas source (20) and the free end of the elongated portion (16) is connected to at least a second gas source (22); both of the gas sources (20, 22) are activatable by said electronic control unit (30); when only the first gas source (20) is activated the partial activation of said first airbag assembly is carried out with the deployment of only the first casing and when both of the gas sources (20, 22) are activated the total activation of said first airbag assembly is carried out with the deployment of both casings (12, 14).

2. **Aircraft** according to claim 1, wherein said electronic control unit (30) is configured to control:

the total activation (160) of said first airbag assembly (3) and said second airbag assembly (5) when the pitch angle detected is equal or very close to the target pitch angle according to a prescribed tolerance;
the total activation (170) of said first airbag assembly (3) and the partial activation of said second airbag assembly (5) when the pitch angle detected is greater than the target pitch angle beyond a prescribed tolerance; and
the partial activation (180) of said first airbag assembly (3) and the total activation of said second airbag assembly (5) when the pitch angle detected is less than the target pitch angle beyond a prescribed tolerance.

3. **Aircraft** according to claim 2, wherein said first airbag assembly (3), of the front type, is at a shorter distance (D1) from the front end portion (7) of the aircraft with respect to the distance (D2) at which the second airbag assembly (3), of the rear type, is from said front end portion (7).

4. **Aircraft** according to claim 2 or 3, wherein said electronic control unit (30) is configured to detect the altitude of the aircraft (130) to enable (140) the partial or total activation of the first and the second airbag assemblies (3, 5) when the altitude is lower than an activation limit value.

**Patentansprüche**

1. Luftfahrzeug, das einen Rumpf (4) aufweist und mit einem Airbagsystem für das Luftfahrzeug eines automatisch adaptiven Typs versehen ist, das eine erste Airbaganordnung (3), die durch den Rumpf (4) getragen wird und ausgelegt ist, sich dann, wenn sie auf ihre Aktivierung folgend aufgeblasen wird, von einer Unterseite (4a) des Rumpfs (4) des Luftfahrzeugs auszudehnen, und mindestens eine zweite Airbaganordnung (5), die durch den Rumpf (4) getragen wird und ausgelegt ist, sich dann, wenn sie auf ihre Aktivierung folgend aufgeblasen wird, von der Unterseite (4a) des Rumpfs (4) des Luftfahrzeugs auszudehnen, umfasst, wobei die erste und die zweite Airbaganordnung (3, 5) entlang des Rumpfs (4) des Luftfahrzeugs voneinander beabstandet sind, wobei

jede erste und zweite Airbaganordnung (3, 5) konfiguriert ist, teilweise oder vollständig aktiviert zu werden, um eine erste Anordnung, in der der Airbagkörper sich um eine erste Länge (H1) vom Rumpf des Luftfahrzeugs ausdehnt, und eine zweite Anordnung, in der der Airbagkörper sich um eine zweite Länge (H2), die größer als die erste Länge (H1) ist, vom Rumpf des Luftfahrzeugs ausdehnt, alternativ auszuführen; das Airbagsystem mit einer elektronischen Steuereinheit (30) versehen ist, die ausgelegt ist, Flugparameter des Luftfahrzeugs vor dem Aufprall zu detektieren, um die teilweise/vollständige Aktivierung jeder ersten/zweiten Airbaganordnung (3, 5) auszuführen und die Aufpralllasten zu verringern, wobei die erste Airbaganordnung (3) und die zweite Airbaganordnung (5) voneinander beabstandet entlang des Rumpfs (4) angeordnet sind und ausgelegt sind, die Lasten zu verringern, die aus einem Aufprall des Rumpfs des Luftfahrzeugs auf Wasser resultieren; und die elektronische Steuereinheit (30) ausgelegt ist, den vorhergesagten Neigungswinkel beim Aufprall auf die Wasseroberfläche zu detektieren, und konfiguriert ist, den detektierten Neigungswinkel mit einem Sollneigungswinkel zu vergleichen, der durch die Flughandbücher vorhergesagt wird, um Aufpralllasten zu verringern: wobei die elektronische Steuereinheit (30) ausgelegt ist, auf der Grundlage der Ergebnisse des Vergleichs die teilweise oder vollständige Aktivierung der ersten und der zweiten Airbaganordnung (3, 5) zu steuern; **dadurch gekennzeichnet, dass**
jede erste und zweite Airbaganordnung (3, 5) eine erste aufblasbare Hülle (12), die konfiguriert ist, in Verwendung eine ringförmige Form um eine Achse (13) anzunehmen, und eine zweite aufblasbare Hülle (14), die durch die erste Hülle (12) getragen wird und konfiguriert ist, in Verwendung eine zylindrische Form um die Achse (13) anzunehmen, umfasst, wobei ein langgestreckter Abschnitt (16) axial durch die zentrale Öffnung der ersten ringförmigen aufblasbaren Hülle (12) verläuft; und ferner **dadurch gekennzeichnet, dass**

die erste aufblasbare Hülle (12) mit mindestens einer ersten Gasquelle (20) verbunden ist und das freie Ende des langgestreckten Abschnitts (16) mit mindestens einer zweiten Gasquelle (22) verbunden ist; beide Gasquellen (20, 22) durch die elektronische Steuereinheit (30) aktivierbar sind; dann, wenn lediglich die erste Gasquelle (20) aktiviert wird, die teilweise Aktivierung der ersten Airbaganordnung mit dem Einsatz lediglich der ersten Hülle ausgeführt wird, und dann, wenn beide Gasquellen (20, 22) aktiviert werden, die vollständige Aktivierung der ersten Airbaganordnung mit dem Einsatz beider Hüllen (12, 14) ausgeführt wird.

2. Luftfahrzeug nach Anspruch 1, wobei die elektronische Steuereinheit (30) konfiguriert ist, Folgendes zu steuern:

die vollständige Aktivierung (160) der ersten Airbaganordnung (3) und der zweiten Airbaganordnung (5), wenn der detektierte Neigungswinkel gemäß einer vorgegebenen Toleranz gleich oder sehr nahe dem Sollneigungswinkels ist; die vollständige Aktivierung (170) der ersten Airbaganordnung (3) und die teilweise Aktivierung der zweiten Airbaganordnung (5), wenn der detektierte Neigungswinkel über eine vorgegebene Toleranz hinaus größer als der Sollneigungswinkel ist; und die teilweise Aktivierung (180) der ersten Airbaganordnung (3) und die vollständige Aktivierung der zweiten Airbaganordnung (5), wenn der detektierte Neigungswinkel über eine vorgegebene Toleranz hinaus kleiner als der Sollneigungswinkel ist.

3. Luftfahrzeug nach Anspruch 2, wobei die erste Airbaganordnung (3) des frontalen Typs in Bezug auf die Entfernung (D2), bei der die zweite Airbaganordnung (3) des rückwärtigen Typs vom Vorderseitenabschnitt (7) ist, bei einer kürzeren Entfernung (D1) vom Vorderseitenabschnitt (7) des Luftfahrzeugs ist.

4. Luftfahrzeug nach Anspruch 2 oder 3, wobei die elektronische Steuereinheit (30) konfiguriert ist, die Höhe des Luftfahrzeugs (130) zu detektieren, um die teilweise oder vollständige Aktivierung der ersten und der zweiten Airbaganordnung (3, 5) zu aktivieren (140), wenn die Höhe kleiner als ein Aktivierungsgrenzwert ist.

## Revendications

1. Aéronef ayant un fuselage (4) et doté d'un système de coussin de sécurité gonflable pour l'aéronef d'un type auto-adaptatif comprenant un premier ensemble de coussin de sécurité gonflable (3) porté par le fuselage (4) et adapté pour s'étendre, lorsqu'il est gonflé suite à son activation, à partir d'un côté inférieur (4a) du fuselage (4) de l'aéronef et au moins un second ensemble de coussin de sécurité gonflable (5) porté par le fuselage (4) et adapté pour s'étendre, lorsqu'il est gonflé suite à son activation, à partir du côté inférieur (4a) du fuselage (4) de l'aéronef, le premier et le second ensemble de coussin de sécurité gonflable (3, 5) étant espacés l'un de l'autre le long du fuselage (4) de l'aéronef,

dans lequel chaque premier et second ensemble de coussin de sécurité gonflable (3, 5) est configuré pour être partiellement ou complètement activé afin de réaliser en variante un premier agencement dans lequel le corps de coussin de sécurité gonflable s'étend sur une première longueur (H1) à partir du fuselage de l'aéronef et un second agencement dans lequel le corps de coussin de sécurité gonflable s'étend sur une seconde longueur (H2) supérieure à la première longueur (H1) à partir du fuselage de l'aéronef ; le système de coussin de sécurité gonflable est prévu avec une unité électronique de commande (30) adaptée pour détecter des paramètres de vol dudit aéronef avant l'impact afin de réaliser l'activation partielle/totale de chaque premier/second ensemble de coussin de sécurité gonflable (3, 5) et réduire les charges d'impact, dans lequel le premier ensemble de coussin de sécurité gonflable (3) et le second ensemble de coussin de sécurité gonflable (5) sont agencés à distance l'un de l'autre le long du fuselage (4) et sont adaptés pour réduire les charges, provenant d'un impact dans l'eau du fuselage de l'aéronef ; ladite unité électronique de commande (30) étant adaptée pour détecter l'angle de tangage prévu suite à l'impact sur la surface de l'eau et étant configurée pour comparer l'angle de tangage détecté avec un angle de tangage cible prévu par les manuels de vol afin de réduire les charges d'impact : ladite unité électronique de commande (30) étant adaptée pour commander, sur la base des résultats de la comparaison, l'activation partielle ou totale dudit premier et dudit second ensemble de coussin de sécurité gonflable (3, 5) ;
**caractérisé en ce que** chaque premier et second ensemble de coussin de sécurité gonflable (3, 5) comprend une première enveloppe gonflable (12) configurée pour adopter, à l'usage, une forme toroïdale autour d'un axe (13) et une seconde enveloppe gonflable (14) portée par la première enveloppe (12) et configurée pour adopter, à l'usage, une forme cylindrique autour de l'axe (13) avec une partie allongée (16) s'étendant axialement à travers l'ouverture centrale de la première enveloppe gonflable toroïdale (12) ;

**caractérisé en outre en ce que** :

la première enveloppe gonflable (12) est raccordée à au moins une première source de gaz (20) et l'extrémité libre de la partie allongée (16) est raccordée à au moins une seconde source de gaz (22) ; les deux sources de gaz (20, 22) peuvent être activées par ladite unité électronique de commande (30) ; lorsque seule la première source de gaz (20) est activée, l'activation partielle du premier ensemble de coussin de sécurité gonflable est réalisée avec le déploiement uniquement de la première enveloppe et lorsque les deux sources de gaz (20, 22) sont activées, l'activation totale dudit premier ensemble de coussin de sécurité gonflable est réalisée avec le déploiement des deux enveloppes (12, 14) .

2. Aéronef selon la revendication 1, dans lequel ladite unité électronique de commande (30) est configurée pour commander :

l'activation totale (160) dudit premier ensemble de coussin de sécurité gonflable (3) et dudit second ensemble de coussin de sécurité gonflable (5) lorsque l'angle de tangage détecté est égal ou très proche de l'angle de tangage cible selon une tolérance prescrite ; l'activation totale (170) dudit premier ensemble de coussin de sécurité gonflable (3) et l'activation partielle dudit second ensemble de coussin de sécurité gonflable (5) lorsque l'angle de tangage détecté est supérieur à l'angle de tangage cible au-delà d'une tolérance prescrite ; et l'activation partielle (180) dudit premier ensemble de coussin de sécurité gonflable (3) et l'activation totale dudit second ensemble de coussin de sécurité gonflable (5) lorsque l'angle de tangage détecté est inférieur à l'angle de tangage cible au-delà d'une tolérance prescrite.

3. Aéronef selon la revendication 2, dans lequel ledit premier ensemble de coussin de sécurité gonflable (3), du type avant, est à une plus courte distance (D1) de la partie d'extrémité avant (7) de l'aéronef par rapport à la distance (D2) à laquelle le second ensemble de coussin de sécurité gonflable (3), du type arrière, est de ladite partie d'extrémité avant (7).

4. Aéronef selon la revendication 2 ou 3, dans lequel ladite unité électronique de commande (30) est configurée pour détecter une altitude de l'aéronef (130) pour permettre (140) l'activation partielle ou totale du premier et du second ensemble de coussin de sécurité gonflable (3, 5), lorsque l'altitude est inférieure à une valeur de limite d'activation.

FIG. 1

FIG. 2

FIG. 3

FIG. 4

EP 3 808 660 B1

FIG. 5

FIG. 6

10b

3

FIG. 7

10a

5

FIG. 8

3

5

FIG. 9

EP 3 808 660 B1

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102019000018731
- US 8418957 B
- US 20070284863 A
- US 100997786 B
- US 9452843 B
- WO 8912778 A